# EUROPEAN PATENT APPLICATION

(11) **EP 4 082 978 A1**
(43) Date of publication of application: **02.11.2022**
(21) Application number: 19957143.1
(22) Date of filing: 27.12.2019
(51) Int. Cl.: C03C 10/02, H01M 10/0562

(54) **ELECTROLYTE CONTAINING SOLID PARTICLES AND LITHIUM ION SECONDARY BATTERY**

(71) Applicant: Microvast Power Systems Co., Ltd., Huzhou, Zhejiang 313000 (CN)
(72) Inventor: CHEN, Zhouwen, Huzhou, Zhejiang 313000 (CN); CHENG, Qing, Huzhou, Zhejiang 313000 (CN); LIU, Chengyi, Huzhou, Zhejiang 313000 (CN)
(74) Representative: Glawe, Delfs, Moll
(86) International application number: PCT/CN2019/128920
(87) International publication number: WO 2021/128228

(57) **Abstract**

Disclosed is an electrolyte containing solid particles and lithium ion secondary battery, comprising: an organic solvent, an electrolyte lithium salt, and glass particles dispersed in the liquid electrolyte, and the glass refers to composite oxide glass containing a lithium oxide and a phosphorus oxide. The above technical scheme may effectively improve the safety performance of a battery, and prolong the service life of the battery.

## Description

### Technical Field

The present disclosure belongs to the technical field of lithium ion batteries, and specifically relates to an electrolyte containing solid particles and a lithium ion secondary battery containing the same.

### Background

At present, lithium ion secondary batteries are widely used in electric vehicles, 3C digital and other fields already. These terminal applications all require batteries with long battery life, and the improvement of the energy density of the lithium ion batteries is a main way to solve this problem. The high-energy-density lithium ion batteries usually need to use a high-nickel positive electrode material, and the high-nickel positive electrode material has the stronger oxidizing properties, and is easy to generate various side reactions with an electrolyte, thus the service life of the battery is affected. In addition, a risk of thermal runaway is significantly increased due to the easy release of oxygen from the high-nickel positive electrode material at a high temperature. Therefore, it is necessary to improve the cycle life and safety of the battery by improving the performance of the electrolyte used in the high-energy-density batteries.

The lithium ion battery usually uses organic solvents, and the battery has a risk of combustion and explosion in the case of abuse. The addition of a flame retardant in the electrolyte is helpful to increase the thermal stability of the electrolyte, thereby the possibility of thermal runaway due to overheating of the battery is significantly reduced. For example, organic phosphorus compounds such as a trimethyl phosphate and a triphenyl phosphate, or fluorinated cyclotriphosphazene flame retardants are added to the electrolyte, to achieve the flame retardant effect by terminating a free radical chain reaction. However, these additives may reduce battery cycle life while the safety performance is improved.

### Summary

An embodiment of the present disclosure provides a non-aqueous suspension electrolyte, and the suspension electrolyte is an electrolyte containing solid particles.

In an achievable mode, an electrolyte containing solid particles is provided, compromising: an organic solvent, an electrolyte lithium salt, and glass particles dispersed in the liquid electrolyte, and the glass refers to composite oxide glass containing a lithium oxide and a phosphorus oxide.

The dispersion of the above glass particles in the electrolyte solution may effectively reduce the flammability of the electrolyte itself. Furthermore, while the suspension electrolyte is used in a lithium ion battery, the glass particles with low electronic conductivity are dispersed among a positive electrode, a negative electrode and a diaphragm to inhibit a micro-short circuit of the battery. If the lithium ion battery is burned, these glass particles may cover the surfaces of the positive electrode, the negative electrode or the diaphragm to form a protective film, a polyphosphoric acid may be further formed in this process, and the polyphosphoric acid with a strong dehydration property may carbonize a polymer to form a carbon isolation layer, thereby a risk of further violent combustion and explosion is reduced. In addition, the composite oxide glass particles compromising the lithium oxide and the phosphorus oxide of the present disclosure have the lower activation energy, so that the ionic conductivity thereof is several orders of magnitude higher than that of corresponding lithium phosphate crystals (such as LiPO₃, Li₃PO₄ or Li₂P₂O₇), and the conductivity is isotropic. The deposition of such glass particles on the surface of the positive electrode or the negative electrode may reduce the interface impedance, reduce the contact between the positive electrode and the electrolyte, reduce the surface activity of a positive electrode material, and inhibit a side reaction between the positive electrode and the electrolyte, thereby the service life of the battery is improved.

In some embodiments, the above composite oxide glass compromising the lithium oxide and the phosphorus oxide is xLi₂O-(1-x)P₂O₅ glass, wherein 0.3≤x≤0.7. While x<0.3, in a preparation process of glass melting and quenching, P₂O₅ in a melt formed is easily volatilized so that it is difficult to form a stable liquid phase; and while x>0.7, partial crystallization may occur during a quenching process, and it is difficult to completely vitrify.

In other embodiments, the composite oxide glass compromising the lithium oxide and the phosphorus oxide may be M-doped xLi₂O-(1-x)P₂O₅ glass, wherein 0.3≤x≤0.7, M is selected from one or more of the group consisting of sulfur, boron, sodium, potassium, halogen, silicon, niobium and tantalum. The element doping of xLi₂O-(1-x)P₂O₅ glass material may further improve the ionic conductivity and flame retardancy of the glass particles, and it is easier to form a glass phase after doping. For example, a phosphorus element in xLi₂O-(1-x)P₂O₅ is replaced by a small amount of the sulfur or tantalum, it may increase the conductivity of lithium ions; doping with halogen ions such as iodine and fluorine may reduce the dissociation energy of the lithium ions or reduce the conductive potential barrier of the lithium ions in a glass network, and significantly improve the lithium ion conductivity of phosphate glass; doped halogen ions such as chlorine and iodine may form halogen free radicals under a heating state to terminate a combustion chain reaction, and further improve the flame retardancy of the glass material; and the addition of a boron element is helpful to form a vitreous and improve the lithium ion conductivity. Usually, the molar percentage content of M in the glass is less than or equal to 10%. The molar percentage content of M refers to the ratio of the molar weight of M to the sum of the molar weights of lithium, phosphorus and M in the glass.

Compared with electrolytes containing a LISICON-type or NSCION-type solid electrolyte, the glass in the present disclosure is an amorphous structure, has the isotropic conductivity, and has the better effect of reducing the interface impedance. The glass in the present disclosure contains the phosphorus, and the flame retardant effect is better; and the LISICON-type or NASCION-type solid electrolyte usually contains the sulfur, and the stability in air is significantly lower than that of the phosphorus oxide glass of the present disclosure. Moreover, in terms of the preparation cost, the glass preparation cost is much lower than that of the LISICON-type or NASCION-type solid electrolyte.

The organic solvent is an organic solvent commonly used in the lithium ion battery, compromising: one or more of the group consisting of ethylene carbonate (EC), propylene carbonate (PC), dimethyl carbonate (DMC), diethyl carbonate (DEC) and ethyl methyl carbonate (EMC).

The electrolyte lithium salt compromises: one or more of the group consisting of lithium hexafluorophosphate (LiPF₆), lithium bis(trifluoromethane sulfonimide) (LiTFSI), and lithium bis(fluorosulfonyl)imide (LiFSI).

In an achievable mode, the electrolyte containing the solid particles further compromises a functional additive, and the functional additive is selected from one or more of the group consisting of vinylene carbonate (VC), fluoroethylene carbonate (FEC), ethylene sulfate (DTD), methylene methane disulfonate (MMDS), 1,3-propane sultone (PS), 1,4-butane sultone, 1,3-propene sultone, lithium difluorophosphate (LiPO₂F₂), lithium bis(oxalate) borate (LiBOB), lithium difluoro(oxalato)borate (LiDFOB), lithium difluorobisoxalate phosphate (LiDFOP), lithium tetrafluoromonooxalate phosphate (UPF₄C₂O₄), lithium bis(trifluoromethane sulfonimide) (LiTFSI) and lithium bis(fluorosulfonyl)imide (LiFSI).

In another achievable mode, the electrolyte containing the solid particles further compromises a suspension auxiliary agent, the suspension auxiliary agent is selected from one or more of the group consisting of a polymer dispersant, a surfactant and an anti-settling agent, and the stability of the suspended electrolyte is improved by changing the steric hindrance or electrostatic force action of the solid particles in the electrolyte. For example, the suspension auxiliary agent may be selected from one or more of the group consisting of a polycarboxylate copolymer dispersant, a polyacrylate-based dispersant, a polyurethane-based dispersant, a phosphate salt anionic surfactant, a sulfate salt anionic surfactant and a titanate coupling agent and the like.

Usually, the particle size of the glass particles dispersed in the electrolyte is 0.01-2 microns. In an achievable mode, the particle size of the glass particles is 0.1-2 microns. In another achievable mode, the particle size of the glass particles is 0.05-1 micron. While the particle size of the glass particles is greater than 2 microns, it is easy to settle in the electrolyte solution, and a filter of an electrolyte injection machine is easily blocked while the battery is injected with the electrolyte; and while the particle size is less than 0.01 micron, the glass particles are prone to block pores of the battery diaphragm. In order to obtain the uniform and stable suspension electrolyte, the desired particle size may be obtained by means of high-energy ball milling and the like.

In an achievable mode, the mass concentration of the glass particles in the electrolyte is 0.01%-30%. In another achievable mode, the mass concentration of the glass particles in the electrolyte is 0.2%-20%, 0.5%-20%, or 1%-15%. While the concentration is lower than 0.01%, the improvement of battery performance is not apparent, and if the concentration is higher than 30%, the viscosity of the electrolyte may be increased, the fluidity may become worse, the difficulty of injecting into a battery cell is increased, and the battery impedance may be increased, so that the battery performance is deteriorated.

According to the purpose of the present disclosure, the suspension electrolyte containing the solid particles needs to exist stably for a long time, for example, the stable existence time is at least 24 h or more. Under the premise without significantly affecting the battery performance, the stability of the suspension electrolyte may be improved by adjusting a pH value of the suspension, the particle size of the glass particles or the use of the suspension auxiliary agent or the like.

Another embodiment of the present disclosure provides a lithium ion secondary battery compromising the above non-aqueous suspension electrolyte, the suspension electrolyte is an electrolyte containing solid particles, compromising: an organic solvent, an electrolyte lithium salt, and glass particles dispersed in the liquid electrolyte, and the glass is composite oxide glass containing a lithium oxide and a phosphorus oxide.

While the suspension electrolyte of the present disclosure is used in the lithium ion secondary battery, in the battery preparation process, a distance between the positive electrode and the diaphragm or a distance between the negative electrode and the diaphragm in a dry battery cell may be appropriately increased before the electrolyte injection, as to improve the uniformity of the glass particles distribution after the suspension electrolyte is injected. For example, the distance between the positive electrode and the diaphragm or the negative electrode and the diaphragm is 0.5-6 microns, or 2-5 microns.

### Detailed Description of the Embodiments

The following specific embodiments describe the present disclosure in detail, but the present disclosure is not limited to the following embodiments.

### Embodiment 1

Preparation of non-aqueous suspension electrolyte:
In an argon-filled glove box (oxygen content < 1 ppm, and water content < 1 ppm), 59.9 g of ethyl methyl carbonate (EMC) was mixed with 26.6 g of ethylene carbonate (EC), and 13.5 g of lithium hexafluorophosphate was continuously added to solution mixed uniformly, a basic electrolyte was obtained after stirring and dissolving, and it was cooled to a room temperature. 0.5Li₂O-0.5P₂O₅ (D50 was 0.2 micron) was added to the above basic electrolyte according to a weight part of 5%, it was stirred at a high speed for 10 minutes, then taken out from the glove box after sealing, ultrasonic treatment (frequency: 50 Hz) was performed by using an ultrasonic cleaner, and a suspension electrolyte was obtained after 30 minutes, and put into the glove box after sealing.

Battery preparation:
Main parameters of positive electrode: calculated by the mass fraction, a positive electrode active material LiNi_{0.8}Co_{0.1}Mn_{0.1}O₂ is 95%, a binder is 3%, a conductive carbon black is 2%, and an aluminum foil was used as a current collector; main parameters of negative electrode: a negative electrode active material was 96% of an artificial graphite, the binder was 3%, the conductive carbon black was 1%, and a copper foil was used as a current collector; and a polypropylene (PP) diaphragm was used, to prepare a dry battery cell by coating, laminating and packaging processes. The above dry battery cell dried was put into the argon-filled glove box, to ensure that the above suspension electrolyte was still in a stable suspension state, 10 g of the suspension electrolyte was injected into the dry battery cell with a needle, it was taken out after sealing and stands for 24 hours, and after subsequent formation, aging and capacity separation, a soft-pack lithium ion secondary battery was obtained. The battery capacity was 2700 mAh, and the battery energy density was about 270 Wh/kg. The battery after the capacity separation was subjected to high-temperature cycling, storage performance and hot box tests respectively.

Battery performance test:
(1) Battery cycle life test: under the ambient temperature of 45°C, the above soft-pack lithium ion secondary battery was charged and discharged in the voltage range of 2.50 V-4.20 V, the charge and discharge rates were both 1C, the charge-discharge cycle stability thereof under a high-temperature condition was investigated.
(2) 70°C high-temperature shelving experiment: it was charged at a room temperature and 1C to 4.2 V, and continuously charged at a constant voltage, a cut-off current was 0.05C, the battery volume was tested under a condition of 25°C after the battery was fully charged, it was placed in a 70°C oven after the test was completed, and after 7 days, the volume and the capacity retention rate and recovery rate of the soft-pack battery were tested.
(3) Hot box test: it was charged at a room temperature and 1C to 4.2 V, and continuously charged at a constant voltage, a cut-off current was 0.05C, the battery was placed in a hot box after it was fully charged, the room temperature was raised to 150°C, the temperature was kept for 2 h, and then the temperature was continuously raised to 200°C at a rate of 2 °C/min, the temperature was kept for 0.5 h, and it was observed whether the battery cell catches fire or explodes in this process.

### Embodiment 2

In a basic electrolyte, 5% of 0.5Li₂O-0.5P₂O₅ (D50 was 0.2 micron) was added, and 0.3% of dispersant ACUMER 1000 (purchased from Shanghai Kaiyin Chemical Co., Ltd.) was added, to prepare the suspension electrolyte by ultrasonic dispersion. Battery preparation and performance tests were the same as in Embodiment 1.

### Embodiment 3

In a basic electrolyte, 10% of 0.5Li₂O-0.5P₂O₅ (D50 was 0.2 micron) was added, and 0.5% of dispersant ACUMER 1000 was added, to prepare the suspension electrolyte by ultrasonic dispersion. Battery preparation and performance tests were the same as in Embodiment 1.

### Embodiment 4

In a basic electrolyte, 5% of 0.5Li₂O-0.5P₂O₅ (D50 was 1 micron) was added, and 0.5% of dispersant ACUMER 1000 was added, to prepare the suspension electrolyte by ultrasonic dispersion. Battery preparation and performance tests were the same as in Embodiment 1.

### Embodiment 5

In a basic electrolyte, 5% of 0.5Li₂O-0.5P₂O₅ (D50 was 0.05 micron) was added, and 0.1% of dispersant ACUMER 1000 was added, to prepare the suspension electrolyte by ultrasonic dispersion. Battery preparation and performance tests were the same as in Embodiment 1.

### Embodiment 6

In a basic electrolyte, 1% of 0.5Li₂O-0.5P₂O₅ (D50 was 0.2 micron) was added, and 0.1% of dispersant ACUMER 1000 was added, to prepare the suspension electrolyte by ultrasonic dispersion. Battery preparation and performance tests were the same as in Embodiment 1.

### Embodiment 7

In a basic electrolyte, 15% of 0.5Li₂O-0.5P₂O₅ (D50 was 0.2 micron) was added, and 0.6% of dispersant ACUMER 1000 was added, to prepare the suspension electrolyte by ultrasonic dispersion. Battery preparation and performance tests were the same as in Embodiment 1.

### Embodiment 8

In a basic electrolyte, 5% of 0.3Li₂O-0.7P₂O₅ (D50 was 0.2 micron) was added, and 0.3% of dispersant ACUMER 1000 was added, to prepare the suspension electrolyte by ultrasound. Battery preparation and performance tests were the same as in Embodiment 1.

### Embodiment 9

In a basic electrolyte, 5% of 0.6Li₂O-0.4P₂O₅ (D50 was 0.2 micron) was added, and 0.3% of dispersant ACUMER 1000 was added, to prepare the suspension electrolyte by ultrasound. Battery preparation and performance tests were the same as in Embodiment 1.

### Contrast example 1

A basic electrolyte was obtained by the same method as in Embodiment 1 as a comparison, without adding any additives.

### Contrast example 2

In a basic electrolyte, 50% of 0.5Li₂O-0.5P₂O₅ (D50 was 0.2 micron) was added, and 2% of dispersant ACUMER 1000 was added, to prepare the suspension electrolyte by ultrasound. Battery preparation and performance tests are the same as in Embodiment 1.

### Contrast example 3

In a basic electrolyte, 5% of 0.5Li₂O-0.5P₂O₅ (D50 was 5 microns) was added, and 0.5% of dispersant ACUMER 1000 was added, to prepare the suspension electrolyte by ultrasound, but the suspension may appear apparent settlement within a few minutes, and was not injected into a battery cell for subsequent testing.

Combined with Embodiments 1-9 and Contrast examples 1-3, it may be seen that the battery using the suspension electrolyte containing xLi₂O-(1-x)P₂O₅ glass particles has the better high-temperature cycle life and high-temperature storage performance, and may inhibit gas generation of the battery cell under a high-temperature storage condition. At the same time, it may be seen that the addition of a small amount of the dispersant in the electrolyte has no significant effect on the performance. The excessive addition or the use of xLi₂O-(1-x)P₂O₅ glass particles with the large particle size may lead to the significant deterioration of the battery cell performance or the deterioration of the electrolyte suspension stability so that the setting was generated.

**Table 1: Physical and chemical properties of electrolyte**

| | Solid particles | Addition proportion | Particle size/micron | Dispersant |
|---|---|---|---|---|
| Embodiment 1 | 0.5Li₂O-0.5P₂O₅ | 5% | 0.2µm | -- |
| Embodiment 2 | 0.5Li₂O-0.5P₂O₅ | 5% | 0.2µm | ACUMER 1000 |
| Embodiment 3 | 0.5Li₂O-0.5P₂O₅ | 10% | 0.2µm | ACUMER 1000 |
| Embodiment 4 | 0.5Li₂O-0.5P₂O₅ | 5% | 1µm | ACUMER 1000 |
| Embodiment 5 | 0.5Li₂O-0.5P₂O₅ | 5% | 0.05µm | ACUMER 1000 |
| Embodiment 6 | 0.5Li₂O-0.5P₂O₅ | 1% | 0.2µm | ACUMER 1000 |
| Embodiment 7 | 0.5Li₂O-0.5P₂O₅ | 15% | 0.2µm | ACUMER 1000 |
| Embodiment 8 | 0.3Li₂O-0.7P₂O₅ | 5% | 0.2µm | ACUMER 1000 |
| Embodiment 9 | 0.6Li₂O-0.4P₂O₅ | 5% | 0.2µm | ACUMER 1000 |
| Contrast example 1 | -- | -- | 0.2µm | -- |
| Contrast example 2 | 0.5Li₂O-0.5P₂O₅ | 50% | 0.2µm | ACUMER 1000 |
| Contrast example 3 | 0.5Li₂O-0.5P₂O₅ | 5% | 5µm | ACUMER 1000 |

**Table 2: Comparison of high-temperature cycle, storage and hot box performance**

| | Initial capacity (Ah) | 45°C 300 Weekly capacity retention rate | 70°C 7-day storage | | Volume change | Hot box test |
|---|---|---|---|---|---|---|
| | | | Capacity retention | Capacity recovery | | |
| Embodi ment 1 | 2.706 | 91.6% | 87.54% | 94.11% | 2.3% | No fire or explosion |
| Embodi ment 2 | 2.707 | 90.7% | 86.39% | 93.15% | 2.1% | No fire or explosion |
| Embodi ment 3 | 2.712 | 93.2% | 90.21% | 96.35% | 1.9% | No fire or explosion |
| Embodi ment 4 | 2.695 | 90.9% | 85.25% | 93.18% | 2.3% | No fire or explosion |
| Embodi ment 5 | 2.704 | 92.1% | 89.13% | 95.7% | 1.9% | No fire or explosion |
| Embodi ment 6 | 2.682 | 86.2% | 83.34% | 89.48% | 4.3% | No fire or explosion |
| Embodi ment 7 | 2.723 | 90.8% | 89.15% | 95.26% | 2.1% | No fire or explosion |
| Embodi ment 8 | 2.693 | 89.1% | 84.36% | 91.24% | 1.5% | No fire or explosion |
| Embodi ment 9 | 2.713 | 92.7% | 88.34% | 95.8% | 2.8% | No fire or explosion |
| Contrast | 2.675 | 63.2% | 68.49% | 72.21% | 11.7% | Fire while |
| example 1 | | | | | | heated to 180°C |
| Contrast example 2 | 2.693 | 69.4% | 72.68% | 78.29% | 1.3% | No fire or explosion |

## Claims

1. An electrolyte containing solid particles, comprising: an organic solvent, an electrolyte lithium salt and glass particles dispersed in the liquid electrolyte, and the glass is composite oxide glass comprising a lithium oxide and a phosphorus oxide.

2. The electrolyte containing the solid particles according to claim 1, wherein the composite oxide glass comprising the lithium oxide and the phosphorus oxide is xLi₂O-(1-x)P₂O₅ glass, wherein 0.3≤x≤0.7.

3. The electrolyte containing the solid particles according to claim 1, wherein the composite oxide glass comprising the lithium oxide and the phosphorus oxide is M-doped xLi₂O-(1-x)P₂O₅ glass, wherein 0.3≤x≤0.7, M is selected from one or more of the group consisting of sulfur, boron, sodium, potassium, halogen, silicon, niobium and tantalum.

4. The electrolyte containing the solid particles according to claim 3, wherein the molar percentage content of M in the glass is less than or equal to 10%.

5. The electrolyte containing the solid particles according to claim 1, wherein further comprising a functional additive, the functional additive is selected from one or more of the group consisting of vinylene carbonate, fluoroethylene carbonate,ethylene sulfate, methylene methane disulfonate, 1,3-propane sultone, 1,4-butane sultone, 1,3-propene sultone, lithium difluorophosphate, lithium bis(oxalato)borate, lithium difluoro(oxalato)borate, lithium difluorobisoxalate phosphate, lithium tetrafluoromonooxalate phosphate, lithium bis(trifluoromethane sulfonimide) and lithium bis(fluorosulfonyl)imide.

6. The electrolyte containing the solid particles according to claim 1, wherein further comprising a suspension auxiliary agent, the suspension auxiliary agent is selected from one or more of the group consisting of a polymer dispersant, a surfactant and an anti-settling agent.

7. The electrolyte containing the solid particles according to any one of claims 1-6, wherein the organic solvent is selected from one or more of the group consisting of ethylene carbonate, propylene carbonate, dimethyl carbonate, diethyl carbonate and ethyl methyl carbonate.

8. The electrolyte containing the solid particles according to any one of claims 1-6, wherein the electrolyte lithium salt is selected from one or more of the group consisting of lithium hexafluorophosphate, lithium bis(trifluoromethane sulfonimide) and lithium bis(fluorosulfonyl)imide.

9. The electrolyte containing the solid particles according to any one of claims 1-6, wherein the particle size of the glass particles dispersed in the liquid electrolyte is 0.01-2 microns.

10. The electrolyte containing the solid particles according to claim 9, wherein the particle size of the glass particles dispersed in the liquid electrolyte is 0.05-1 micron.

11. The electrolyte containing the solid particles according to any one of claims 1-6, wherein the mass concentration of the glass particles in the electrolyte is 0.01%-30%.

12. A lithium ion secondary battery, comprising the electrolyte containing the solid particles according to claim 1.
